(19) Europäisches Patentamt
European Patent Office
Office européen des brevets

(11) Veröffentlichungsnummer: **0 150 005**
**B1**

(12) # EUROPÄISCHE PATENTSCHRIFT

(45) Veröffentlichungstag der Patentschrift: **23.09.87**

(51) Int. Cl.⁴: **G 11 B 5/702**

(21) Anmeldenummer: **85100120.6**

(22) Anmeldetag: **07.01.85**

(54) **Magnetisches Speichermedium.**

(30) Priorität: **19.01.84 DE 3401771**

(43) Veröffentlichungstag der Anmeldung: **31.07.85 Patentblatt 85/31**

(45) Bekanntmachung des Hinweises auf die Patenterteilung: **23.09.87 Patentblatt 87/39**

(84) Benannte Vertragsstaaten: **DE FR GB**

(56) Entgegenhaltungen:
**DE-A-3 047 377**
**DE-A-3 151 590**
**DE-A-3 151 797**
**DE-A-3 208 865**
**DE-A-3 321 924**

(73) Patentinhaber: **Agfa- Gevaert AG, Patentabteilung, D-5090 Leverkusen 1 (DE)**

(72) Erfinder: **Gerum, Johannes, Dr., Blumenstrasse 51, D-8034 Unterpfaffenhofen (DE)**
Erfinder: **Nippe, Burkhard, Dr., Krennerweg 20, D-8000 München 71 (DE)**
Erfinder: **Meckel, Walter, Dr., Zonser Strasse 9, D-4040 Neuss (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 150 005 B1**

LIBER, STOCKHOLM 1987

**Beschreibung**

Die Erfindung bezieht sich auf ein magnetisches Speichermedium, bestehend aus einem unmagnetischen Schichtträger und mindestens einer darauf befindlichen magnetisierbaren Schicht, die feinteilige magnetische Pigmente und Polyurethane als Bindemittel enthält.

Es ist bereits bekannt, daß magnetische Speichermedien hoher Speicherdichte erst dann eine ausreichende Verschleißfestigkeit erhalten, wenn das eingesetzte Bindemittelsystem aus einem dreidimensional verknüpften Netzwerk aufgebaut ist. Um dies zu erreichen, werden unterschiedliche Wege vorgeschlagen. So erhält man ein hochmolekulares, abriebfestes Melaminharz als Bindemittelmatrix durch Umsetzung von Hexamethylolmelamin mit funktionellen-gruppenhaltigen Bindemitteln in Gegenwart von Säuren als Katalysatoren. Als geeignete Bindemittel werden unter anderem Hydroxyalkylmethacrylate, Alkydharze, Epoxidharze, Polyvinylalkohol- oder Cellulosederivate genannt. Um jedoch eine ausreichende Reaktionsgeschwindigkeit zu erreichen, muß diese Vernetzungsreaktion mit starken Säuren katalysiert werden, was insbesondere bei Zusatz von Copolymeren auf Polyester/Polyurethanbasis zum Abbau des Polymeren und damit zu einer drastischen Verminderung der Bandstabilität führt. Weiter werden durch starke Säuren die insbesondere bei magnetischen Speichermedien hoher Speicherdichte eingesetzten Ton- und Videoköpfe beschädigt, was in kurzer Zeit zu einem deutlichen Pegelabfall führt.

Phenoxy- und Epoxyharze lassen aich in Gegenwart von Säuren oder Basen ebenfalls zu einem dreidimensionalen Netzwerk verknüpfen. Ähnlich wie beim Aufbau des hochmolekularen Melaminharzes wirken sich die erforderlichen Katalysatoren im Hinblick auf einen Bindemittelabbau oder Korrosion von Aufnahme- und Wiedergabeköpfe nachteilig aus.

Weitaus am häufigsten wird der Aufbau eines hochmolekularen Bindemittelnetzwerkes jedoch durch Zugabe von Isocyanat-gruppenhaltigen Verbindungen in die magnetische Dispersition angestrebt. Dabei ist mit einer Reihe von Nebenreaktionen zurechnen, die in Konkurrenz zu der angestrebten Bindemittelverknüpfung stehen.

So werden insbesondere bei magnetischen Spreichermedien hoher Speicherdichte Pigmente eingesetzt. deren Oberfläche mit niedermolekularen, reaktiven Verbindungen zur Verbesserung der Dispergierbarkeit belegt sind. In diesem Sinne werden Amine (JP 76/153839), Fettsäuren (JP 77/30649) oder Silikone (JP 76/126713) beschrieben. Durch die Reaktion dieser Verbindungen mit der Isocyanatkomponente entstehen jedoch niedermolekulare Verbindungen, die eine Destabilisierung der magnetisierbaren Schicht bewirken.

Als Gleitmittel werden magnetischen Speichermedien häufig Substanzen zugesetzt, die ebenfalls zu unerwünschten Nebenreaktionen mit der Isocyonatkomponente führen. Bei Zugabe von Fettsäuren (JP 73/82333), mono- oder difunktionellen Glycerinestern (IBM Techn. Discl. Bull. 23, 1981), langkettigen aliphatischen Alkoholen (JP 77/99171), langkettigen Alkylaminen (JP 79/65799) in die magnetische Dispersion werden die zugesetzten isocyanatgruppenhaltigen Verbindungen desaktiviert, wodurch ebenfalls niedermolekulare Verbindungen entstehen, die zu einer Erniedrigung der Schichtstabilität führen.

Die weitaus wichtigste Nebenreaktion mit der niedermolekularen Isocyanatkomponente läuft mit dem Wasser ab, das über das magnetiache Pigment, das polymere Bindemittel oder das Lösungsmittel in die magnetische Dispersion eingeschleppt wird. Im Vergleich zu den übrigen Reaktionspartnern des Isocyanates liegt das Wasser im molekularen Überschuß vor, verfügt aufgrund der kleinen Molekülgröße über eine hohe Beweglichkeit und hat zudem die höchste Reaktivität. Bei einem Überschuß von Wasser reagiert die Vernetzungskomponente zu einem Polyharnstoffgerüst ab und verbessert dadurch zwar den Elastizitätsmodul der magnetisierbaren Schicht, ohne jedoch eine Verringerung der Abriebsneigung oder eine Verbesserung der Lösungsmittelfestigkeit zu bewirken.

Außer durch möglichst starke Vernetzung läßt sich die Verschleißfestigkeit eines magnetischen Speichermediums auch durch das polymere Bindemittel selbst steuern. Dabei gilt, daß sich durch steigende Härte, einen hohen Dehnungsmodul und große Reißfestigkeit des Bindemittels die mechanischen Eigenschaften der resultierenden magnetisierbaren Schicht in die gewünschte Richtung verändern lassen. Dies erreicht man auf zweierlei Weise. Durch Abmischen eines harten Bindemittels, z. B. ein Phenoxy-, ein Epoxyharz, ein Copolymeres aus Vinylchlorid/Vinylacetat/Vinylalkohol, oder ein Copolymeres aus Vinylchlorid/Vinylidenchlorid, mit einer weichen Poylester-Polyurethan-Komponente lassen sich die gewünschten Eigenschaften zwar weitgehend anforderungsgemäß einstellen, in den allermeisten Fällen führt eine thermodynamische Unverträglichkeit der Komponente jedoch zu einer Entmischung des Bindemittelsystems. Dies äußerst sich insbesondere langfristig in einem drastischen Abfall aller mechanischen Eigenschaften des magnetischen Speichermediums. Eine derartige Entmischung läßt sich vermeiden, wenn die geforderten mechanischen Eigenschaften durch ein einziges Polymer eingestellt werden können. Das Polyurethansystem bietet sich dazu an, da durch beliebige Kombination des Weich- und Hartsegmentes im Polyurethan eine große Variationsbreite der resultierenden Eigenschaften offen steht. So läßt sich etwa durch Anhebung des Hartsegmentanteils und Senkung des Weichsegmentanteils ein singuläres Bindemittelsystem aufbauen, das die gewünschten hohen mechanischen Werte erreicht. Als Nachteil dieses Vorgehens muß jedoch eine Verschlechterung der Dispergierbarkeit der feinteiligen magnetischen Pigmente in Kauf genommen werden. Die in den letzten Jahren erfolgte Erhöhung der Speicherdichte brachte steigende Anforderungen an die mechanische Stabilität magnetischer Speichermedien mit sich. Durch die Vernetzung der eingesetzten Bindemittel läßt sich dieses Ziel aufgrund von unerwünschten Nebenreaktionen bisher nicht erreichen. Entweder war die Abriebfestigkeit der magnetisierbaren Schicht nicht ausreichend oder es mußte zur Beschleunigung der Vernetzungsgeschwindigkeit ein Katalysator eingesetzt werden, der die Wandlerköpfe

beschädigt oder einen Abbau des Bindemittels bewirkte. Auch durch Einsatz harter polymerer Bindemittel kann die mechanische Anforderung an Bänder hoher Speicherdichte nicht befriedigend gelöst werden, da bei Abmischung eines elastischen Bindemittels mit einem harten Bindemittel Entmischungen auftreten und durch den Einsatz einer einzigen harten Bindemitteltype die Dispergierbarkeit der magnetischen Pigmente drastisch verschlechtert wird.

Der Erfindung liegt daher die Aufgabe zugrunde, ein Bindemittelsystem für ein magnetisches Speichermedium zu finden, das unabhängig von eventuell am magnetischen Pigment oder in der magnetischen Dispersion vorhandenen reaktiven niedermolekularen Substanzen ein dreidimensionales Netzwerk durch Verknüpfung eines hochmolekularen Polyurethans mit einer mehrfunktionellen niedermolekularen Diisocyanatverbindung ausbildet.

Das Bindemittelsystem sollte vorzugsweise aus einer einzigen polymeren Komponente bestehen, welche die Dispergierbarkeit des magnetischen Pigmentes nicht nachteilig beeinflußt.

Diese Aufgabe wurde erfindungsgemäß durch ain magnetisches Speichermedium gelöst, bestehend aus einem unmagnetischen Schichtträger und mindestens einer darauf befindlichen, magnetisierbaren Schicht, die feinteilige, magnetische Pigmente und als Bindemittel Polyurethane enthält, wobei die Polyurethanbindemittel Umsetzungsprodukte sind von

A Polyisocyanaten der mittleren Funktionalität 2,1 - 4 mit

B aromatische Aminoendgruppen tragenden Polyurethanen mit einer Funktionalität zwischen 1,95 und 2,2 und mit einem mittleren Molekulargewicht von mindastens 10 000 und gegebenenfalls

C 5 - 40 Gewichtsprozent der Komponente B, eines oder mehrerer hydroxylgruppenhaltiger Polyester der OH-Zahl 100 bis 450 und/oder

D 2 - 10 Gewichtsprozent der Komponente B, bifunktioneller aromatischer Polyamine mit einem Molekulargewicht von 108 - 400,

wobei das Verhältnis der in A vorhandenen Isocyanatgruppen zu den in B, C und D vorhandenen, gegenüber Isocyanat reaktiven Gruppen zwischen 0,3 : 1 und 20 : 1 liegt.

Die Herstellung der Polyurethane B mit einem Molekulargewicht von mindestens 10 000 kann auf die verschiedensten Arten erfolgen. So können vorwiegend bifunktionelle aromatische Aminogruppen enthaltende Polyester oder Polyether mit einem Molekulargewicht von 600 - 4000, wie sie in den DE-PS 23 48 419, 31 31 253 oder 32 23 395 beschrieben sind, mit vorwiegend bifunktionellen Polyisocyanaten in einem solchen Verhältnis umgesetzt werden, daß das Verhältnis der Aminogruppen zu den Isocyanatgruppen zwischen 1 : 0,97 und 1 : 0,70 liegt.

In einem weiteren Verfahren können die aromatische Aminoendgruppen tragenden Polyurethane B in Lösung hergestellt werden durch Umsetzung eines Isocyanatgruppen enthaltenden Reaktionsgemisches a) aus einem weitgehend bifunktionellen gegenüber Isocyanatgruppen reaktiven Gemisch aus der Gruppe der Hydroxylgruppen enthaltenden Polyester und/oder Polyether des Molekulargewichts 300 - 6 000 und/oder der niedermolekularen Diole, Diamine oder Aminoalkohole des Molekulargewichts 32 - 400 mit einem mittleren OH-Zahl-Äquivalent von 40 - 1 200 mit mindestens einem weitgehend bifunktionellen Polyisocyanat b), wobei das Verhältnis der Isocyanatgruppen in b) zu den gegenüber Isocyanatgruppen reaktiven Gruppen in a) zwischen 1,45 : 1 und 1,02 : 1 liegt, sodaß aus der Umsetzung von a) und b) ein Isocyanatgruppen enthaltendes Prepolymer entsteht, das mit Polyaminen ausgewählt aus der Gruppe der araliphatischen und/oder aromatischen bifunktionellen Polyamine weiter umgesetzt werden kann sodaß das Verhältnis von Isocyanatgruppen im Prepolymeren zu Aminogruppen der Polyamine zwischen 1 : 5 und 1 : 1,5 liegt.

In einem besonders bevorzugten Verfahren werden die aromatische Aminoendgruppen tragenden Polyurethane B in Lösung hergestellt durch Umsetzung eines Isocyanatgruppen enthaltenden Reaktionsgemisches a) aus einem weitgehend bifunktionellen gegenüber Isocyanatgruppen reaktiven Gemisch aus der Gruppe der Hydroxylgruppen tragenden Polyester und/oder Polyether des Molekulargewichts 300 - 6000 und/oder der niedermolekularen Diole, Diamine oder Aminoalkohole des Molekulargewichts 32 - 400 mit einem mittleren OH-Zahl-Äquivalent von 40 - 1200 und mindestens einem weitgehend bifunktionellen Polyisocyanat b), wobei ein Isocyanatgruppen enthaltendes Prepolymer entsteht, das weiter umgesetzt wird mit araliphatischen Diaminen, wobei das Verhältnis von Isocyanatgruppen im Prepolymeren zu Aminogruppen zwischen 1 : 2,5 und 1 : 1,8 liegt.

Besonders bevorzugt ist auch ein Verfahren zur Herstellung der aromatische Aminoendgruppen tragenden Polyurethane B, bei dem anstelle der araliphatischen Diamine aromatische Diamine eingesetzt werden, wobei das Verhältnis von Isocyanatgruppen im Prepolymeren zu Aminogruppen zwischen 1 : 5 und 1 : 2 liegt.

Besonders bevorzugt ist bei einem Verfahren zur Herstellung von Aminoendgruppen tragenden Polyurethanen B der Einsatz von aromatischen Diaminen mit aus sterischen und/oder mesomeren Gründen unterschiedlicher Reaktivität beim Umsatz mit den Prepolymeren.

Als Ausgangsstoffe für die nach den beschriebenen Verfahren herstellbaren Polyurethanlösungen werden die üblichen Polyisocyanate, Polyhydroxyverbindungen und Kettenverlängerer verwendet. Es werden organische Lösungsmittel, die in der Polyurethanchemie üblich sind, eingesetzt.

Dieses Herstellungsverfahren für die Polyurethane bringt einerseits nach Erreichen der erwünschten Viskosität der Polyurethanlösungen in der Aufbaureaktion eine rasche Kettenabbruchsreaktion ohne wesentliche Veränderungen der Viskosität, liefert aber zusätzlich den Vorteil, daß die Polyurethane gleichzeitig auch mit andersartigen, reaktiven $NH_2$-Gruppen versehen werden. Über diese aromatischen Aminoendgruppen ermöglichen die als Vernetzer nechträglich, gewöhnlich in einer Menge von 1-30 Gew.% bezogen auf

Polyurethan, zugefügten Polyisocyanate die für magnetische Aufzeichnungsträger sehr wichtige schnelle und intensive Vernetzung der eingesetzten Bindemittelkomponenten. Dabei sind die entsprechenden Lösungen hinreichend lagerstabil bzw. in den Zeiträumen der Verarbeitung stabil, weiter liegen die Vernetzungstempererturen bei der Polyisocyanatvernetzungsreaktion wesentlich niedriger; Vernetzungen können selbst bei Reumtemperetur eintreten, wenn man die Lösungsmittel-freien Beschichtungen länger stehen läßt. Diese intensive Vernetzung tritt bei niedrigen Temperaturen nicht ein, wenn man Polyurethane mit den üblichen Hydroxylgruppen zur Umsetzung mit den Polyisocyanaten bringt.

Durch Abstoppung mit monofunktionellen Verbindungen wie z. B. Butanol oder Dibutylamin werden nach dem Stand der Technik zwar ebenfalls die Viskositäten der Lösungen stabilisiert, jedoch enthalten die Polyurethane dann nicht reaktive Endgruppen, z. B. Urethan- oder Harnstoffgruppen. In diesem letzteren Falle läßt sich eine Vernetzung dann nur über die Anwendung hoher Tempereturen erzwingen, um die sehr viel weniger reaktiven Urethen- und/oder Harnstoffgruppen noch über Allophanat- oder Biuretreaktionen einzubeziehen. Derartig hohe Temperaturen sind unwirtschaftlich, schädigen zum Teil die Polyurethane oder den zu beschichtenden unmagnetischen Schichtträger.

Die modifizierten Polyurethane sind nunmehr gegenüber den Vernetzerpolyisocyanaten in ihrer Reaktivität durch die Wahl der Abstopper-Diamine so abgestimmt, daß sich Verarbeitungsmischungen aus Polyurethanen und Polyisocyanatvernetzer hinreichend lagerstabil bzw. als für die Verarbeitungszeit stabil herstellen lassen. Verwendet man dagegen entsprechend dem Stand der Technik solche Kettenabbrecher, welche aliphatiache Aminogruppen oder Hydrazidengruppen ergeben, so kann mit den Polyisocyanatvernetzern praktisch augenblickliche Reaktion unter Verquellung der Lösung eintreten. Dasselbe gilt, wenn man das Polyurethen mit Amino- oder Hydrazidendgruppen dadurch aufbaut, daß man NCO-Prepolymere mit einem geringen Überschuß an aliphatischen Diaminen oder Dihydrazidverbindungen umsetzt. Die relativ schnell eintretende Reaktion selbst mit aliphatischen Diisocyanaten wurde entsprechend zum Aufbau von höhermolekularen Polyurethanen in Lösung benutzt (DE-PS 1 157 386).

Durch die Umsetzung von bereits höhermolekularen Polyurethanen mit NCO-Endgruppen und Molgewichten 10 000 mit den erfindungsgemäßen Kettenabbruchsmitteln auf der Basis von vorzugsweise araliphatischen Diaminen oder aromatischen Diaminen mit Aminogruppen unterschiedlicher Reaktivität, werden auch Polyurethanlösungen erhalten, welche in Lösung stabil sind und nicht eine schnelle Verpastung oder ein Ausfallen aus den Lösungsmitteln zeigen. Aminoendgruppenhaltige Verbindungen mit Molekulergewichten bis 6000, wie sie durch Umsetzung von niedermolekularen NCO-Gruppen haltigen Voraddukten mit überschüssigen Diaminen entstehen (DE-B 16 94 152, Spalte 3 und 4) sind in Lösungsmitteln nicht ausreichend stabil und werden daher entsprechend der genannten Auslegeschrift anderweitig verwendet.

Nach dem beschriebenen Verfahren werden die Polyadditionsreaktionen zum Aufbau von Polyurethanen mit einem Molekulargewicht von mindestens 10 000 durch Zusatz der erfindungsgemäßen Kettenabbruchsmittel beendet. Oberhalb der genannten Grenze ist es jedoch möglich, Polyurethane mit gleicher Bruttozusammensetzung, entsprechend der Ausgangskomponenten, jedoch unterschiedlicher Kettenlänge (unterschiedlichem Molekulargewicht oberhalb von Molekulargewichten 10 000) und daraus resultierenden unterschiedlichen Eigenschaften herzustellen. Prinzipiell lassen sich Lösungen mit Konzentrationen von z. B. 10 bis 70 Gew.-% mit beliebigen Viskositäten zwischen 500 und 80 000 mPa.s bei Raumtemperatur, vorzugsweise Viskositäten von 2 000 bis 60 000 mPa.s, aufbauen. Bevorzugt werden jedoch solche Polyurethanlösungen, welche Konzentrationen zwischen 20 und 60 Gew.% und Viskositäten zwischen 2 000 und 50 000 mPa.s aufweisen.

Die mit den Kettenabbruchsmitteln umzusetzenden, noch endständige NCO-Gruppen aufweisenden Polyurethane mit einem Molekulargewicht von mindestens 10 000, entsprechend einem NCO-Gehalt von $\leqslant$ 0,84 % bzw. einem Endgruppenäquivalent von $\leqslant$ 0,2 Äquivelenten NCO-Endgruppen pro kg Polyurethan, werden nach prinzipiell bekannten Verfahren in ein- oder mehrstufiger Reaktionsweise aus den üblichen Ausgangsstoffen, vorzugsweise in Lösung, aufgebaut.

Als organische Polyisocyanate kommen im wesentlichen difunktionelle Diisocyanate in Betracht, z. B. aliphatische, cycloaliphatische, araliphatische, aromatische oder heterocyclische Polyisocyanate mit einer NCO-Funktionalität von vorzugsweise 2, wie sie bei W. Siefken, Liebigs Annalen 562, 75 (1948) beschrieben werden und wie sie vorzugsweise als Diisocyanatkomponenten in der DE-A-29 29 501 aufgeführt sind. Bevorzugte Polyisocyanate sind Diphenylmethan-4,4'- und/oder 2,2'-diisocyanat, Toluylen-2,4- und/oder -2,6-diisocyanat, Paraphenylendiisocyanat, 3,3'-Dimethyl-diphenyl-4,4'-diisocyanat, Mono- bis- tetra-$C_1$-$C_4$-alkylsubstituierte Diphenylmethan-4,4'-diisocyanate, Naphthalin-1,5-diisocyanat, sowie aliphstische oder cycloaliphatische Diisocysnate wie Hexamethylenddiisocyanat, Trimethylhexamethylendiisocyanat, Lysinmethylesterdiisocyanat, Dicyclohexylmethan-4,4'-, -2,4'- und/oder -2,2'-diisocyanat, die Hexahydrotoluylendiisocyanate, Dicyclohexyldiisocyanate, sowie das Isophorondiisocyanat.

Gegebenenfalls können kleine Anteile, 5 Mol-% an höherfunktionellen Isocyanaten mitverwendet werden, wie z. B. Benzol-1,3,5-triisocyanat, Polyphenyl-polymethylen-polyisocyanate, wie sie z. B. in den GB-A-874 430 und 848 671 beschrieben werden, Biuretgruppen aufweisende Polyisocyanate, Isocyanuratgruppen aufweisende Polyisocyanate oder durch Umsetzung von tri- oder höherfunktionellen niedermolekularen Polyolen mit überschüssigen Mengen an Diisocyanaten hergestellte höherfunktionelle Polyisocyanate.

Als höhermolekulare, im wesentlichen difunktionelle Polyhydroxylverbindungen mit Molekulargewichten von 400 bis 6000, können alle höhermolekularen Polyhydroxylverbindungen eingesetzt werden, wie sie üblicherweise bei der Polyurethanherstellung verwendet werden. Typische Vertreter werden beispielsweise in

der DE-B-29 20 501 aufgeführt und sind beispielsweise höhermolekulare Polyester, Polyesteramide, Polyether, Polyacetale und Polycarbonate, vorzugsweise mit Molekulargewichten von 800 bis 3000 und Verbindungen mit etwa zwei Hydroxylgruppen pro höhermolekularer Polyhydroxylverbindung der genannten Molekulargewichtsbereiche. Die für das Verfahren geeigneten, Hydroxylgruppen enthaltenden Polyester sind beispielsweise Umsetzungsprodukte von mehrwertigen, vorzugsweise zweiwertigen Alkoholen mit mehrwertigen, vorzugsweise zweiwertigen Carbonsäuren, Carbonsäureestern und/oder Carbonsäureanhydriden. Gleichfalls verwendet werden können Hydroxycarbonsäuren oder Lactone wie z. B. Caprolacton. Verwendbare Polyester werden beispielsweise auch in Houben-Weyl, Band XIV/2, S. 12 bis 29 Thieme Verlag, Stuttgart 1963, beschrieben.

Die Polycarbonsäuren können aliphatischer, cycloaliphatischer, aromatischer oder heterocyclischer Natur sein. Als Beispiele für solche Carbonsäuren und deren Derivate seien genannt: Oxalsäure, Malonsäure, Bersteinsäure, Glutarsäure, Adipinsäure, Pimelinsäure, Korksäure, Azelainsäure, Sebacinsäure, Maleinsäure, Fumarsäure, Phthalsäure, Isophthalsäure, Terephthalsäure, Diethylbernsteinsäure und 1,4-Cyclohexandicarbonsäure.

Als Alkoholkomponenten können beispielsweise Ethylenglykol, Diethylenglykol, Triethylenglykol, 1,2- und 1,3-Propandiol, 1,4-, 1,3-, 1,2- und 2,3-Butandiol, 1,5-Pentandiol, 1,6-Hexandiol, 1,8-Octandiol, Neopentylglykol, 1,4-Bis-(hydroxymethyl)-cyclohexan, 2-Methyl-1,3-propandiol und alkoxylierte Bisphenole oder deren Hydrierungsprodukte der allgemeinen Formel

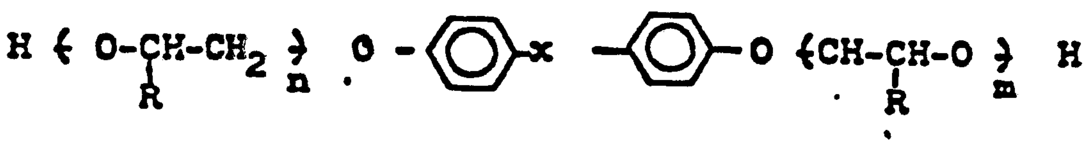

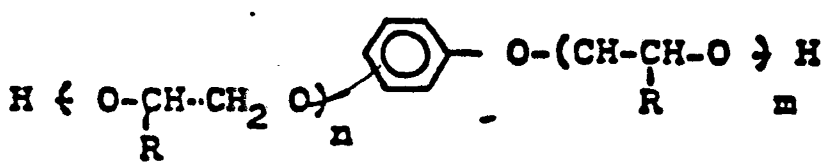

wobei
X: $R_1$-C-$R_2$; $SO_2$; N-$R_3$
n und m = 2-6
R: H, $CH_3$
$R_1$ gleich oder ungleich $R_2$, aber auch mit X einen cycloaliphatischen Kohlenwasserstoffring mit 5 bis 6 C-Atomen darstellen kann, Wasserstoff oder Alkylreste mit 1 bis 6 C-Atomen, symbolsiert verwendet werden.

In untergeordnetem Maße (etwa 5 Mol-%) lassen sich auch höherfunktionelle Polyole wie beispielsweise Glycerin, Trimethylpropan, 1,2,6-Hexantriol, 1,2,4-Butantriol, Pentaerythrit oder Sorbit verwenden. Es sind auch Polyester mit anteiligen Doppel- oder Dreifachbindungen aus ungesättigten Fettsäuren einsetzbar, ebenso Polyester oder Mischpolyester aus Lactonen wie z. B. ε-Caprolacton oder aus Hydroxycarbonsäuren wie z. B. ω-Hydroxycapronsäure.

Die für die beschriebenen Polyurethane verwendbaren Polyesteramide entstehen bei anteiligem Ersatz des zweiwertigen Alkohols der Polyester durch Aminoalkohole Diamine oder Polyamine. Bevorzugt werden dabei Ethanolamin oder Ethylendiamin.

Als höhermolekulare Polyhydroxyverbindungen können aber auch lineare oder schwach verzweigte, vorzugsweise zwei Hydroxylgruppen aufweisende Polyether dienen, z. B. Tetrahydrofuran-polymerisate oder Additionsprodukte aus Alkylenoxiden an Starterverbindungen. Als Alkylenoxide eignen sich beispielsweise Ethylenoxid, Propylenoxid, Butylenoxid, Styroloxid und Epihalogenhydrine. Als Starterkomponenten werden Verbindungen mit beweglichen H-Atomen eingesetzt, wie Wasser, Alkohole, Amine, z. B. Ethylenglykol, 1,2- und 1,4-Propylenglykol, 2,2-Bis-(4-hydroxyphenyl)-propan und Anilin.

Als Polyhydroxylverbindungen sind ebenfalls Polyacetale einsetzbar, die z. B. durch Kondensation von Formaldehyd oder eines anderen Aldehyds mit mehrwertigen Alkoholen der beschriebenen Art entstehen.

Besonders bevorzugt sind Polycarbonate der an sich bekannten Art, die z. B. aus den zuvor genannten Diolkomponenten, insbesondere auf Hexandiol-1,6-Basis, mit z. B. Diphenylcarbonat oder Phosgen hergestellt werden können.

Als niedermolekulare Kettenverlängerungsmittel mit beweglichen Wasserstoffatomen (Zerewitinoff-aktiven H-Atomen) werden solche Verbindungen verwendet, die in etwa bifunktionell mit Isocyanaten reagieren und Molekulargewichte von 18 sowie 32 bis 399, vorzugsweise 62 bis 254, aufweisen.

Insbesondere sind für diesen Zweck niedermolekulare Diole aber auch Aminoalkohole oder Diamine oder Mischungen dder Kettenverlängerungsmittel bzw. eine stufenweise Reaktion mit unterschiedlichen Kettenverlängerungsmitteln, geeignet.

Geeignete Kettenverlängerungsmittel sind Diole oder deren Gemische wie z. B. Ethylenglykol, 1,2- und 1,3-Propandiol, 1,4-, 1,3-, 1,2- und 2,3-Butandiol, 1,5-Pentadiol, 1,6-Hexandiol, Neopentylglykol, 1,4-Bis-(hydroxymethyl)-cyclohexan, 2-Methyl-1,3-propandiol, Di-, Tri- oder Tetraethylenglykol, alkoxylierte Bisphenole oder deren Hydrierungsprodukte, wie sie vorstehend bereits als Diolkomponenten zur Herstellung von Polyestern beschrieben wurden oder Esterdiole, z. B. Hydroxypivalinsäure/Neopentylglykolester.

In anteiligen Mengen, vorzugsweise 5 Mol-%, können auch höherfunktionelle Polyole mitverwendet werden, z. B. Trimethylolpropan.

Ferner sind Aminoalkohole wie Ethanolamin, N-Methyldiethanolamin oder 3-Aminopropanol einsetzbar.

Ebenso eignen sich aliphatische oder cycloaliphatische Diamine wie Ethylendiamin, Tetramethylendiamin, 1,6-Hexamethylendiamin, 1,12-Dodecamethylendiamin, 1-Amino-3-aminomethyl-3,5,5-trimethylcyclohexan, 2,4- und 2,6-Hexahydrotoluylendiamin, 2,4'- und 4,4'-Diaminodicyclohexylmethan, 1-Amino-2-aminomethyl-3,3,5(3,5,5)-trimethylcyclopentan, Toluylendiamin, p-Xylylendiamin, 4,4'-Diaminodiphenylmethan, Hydrazin, Methylhydrazin, N,N'-Dimethylhydrazin und deren Homologe.

Ausführliche Beispiele für die Ausgangsmaterialien (Polyisocyanate, höhermolekulare Polyhydroxylverbindugnen und niedermolekuläre Kettenverlängerungsmittel, sowie gegebenenfalls Katalysatoren, Hilfs- und Zusatzstoffe) werden in der DE-A 28 54 384 aufgeführt.

Die Lösungen der Polyurethane B werden vorzugsweise so hergestellt, daß man zur Lösung der höhermolekularen Polyole und/oder niedermolekularen Kettenverlängerungsmittel in einem Teil des Lösungsmittels die Polyisocyanate zugibt. Mit fortschreitender Umsetzung und steigender Viskosität kann dann portionsweise bis zu der verforderlichen Endkonzentration nachverdünnt werden, wobei die Umsetzungsprodukte bis zur Bildung des noch mindestens 0,2 Äquivalente NCO/1000 g enthaltenden Polyurethans geführt wird, das dann erfindungsgemäß abgestoppt und in Polyurethane mit aromatischen Aminoendgruppen überführt wird.

Die Reaktionstemperaturen liegen etwa bei 30 bis 130° C, vorzugsweise bie 50 bis 100° C.

Alternativ dazu kann man in einer Zweistufenreaktion zunächst die höhermolekularen Polyole und gegebenenfalls niedermolekulare Diole mit den Diisocyanaten in Schmelze oder gegebenenfalls in (einem Teil des) Lösungsmittel(s) umsetzen. Nachfolgend wird mit den genannten niedermolekularen Kettenverlängerungsmitteln die Polymerkette verlängert und die Viskosität erhöht; man verdünnt gegebenenfalls, wie beschrieben auf die erforderliche Endkonzentration.

In einem bevorzugten Verfahren werden die höhermolekularen Polyole mit einem Überschuß des Polyisocyanats zunächst zu einem NCO-Prepolymeren umgesetzt, das dann mit Glykolen, z. B. Butandiol-1,4 und/oder (stufenweise) mit Diaminen, z. B. Isophorondiamin oder N-(β-Hydroxyäthyl)-ethylandiamin verlängert wird, bis das gewünschte, noch NCO-Gruppen enthaltende Polyurethan erhalten wird, das der Abbruchsreaktion unterworfen werden soll.

Es ist ein besonders bevorzugtes Verfahran, zunächst höhermolekulare Polyhydroxylverbindungen, Polyisocyanat und Diolkettenverlängerer und gegebenenfalls Lösungsmittel ein- oder mehrstufig, das heißt direkt oder über NCO-Prepolymere, zu einem bereits relativ hochmolekularen Polyurethan mit endständigen NCO-Gruppen und somit bis zu einer bereits relativ hochviskosen Polyurethan-Lösung umzusetzen (der Anteil der Diol-Kettenverlängerungsmittel beträgt hierbei 80 % der Gesamtkettenverlängerer). Durch Zugabe von (cyclo)aliphatischen Diaminen in geringen Mengen kann eine schnelle Viskositätserhöhung in dar Lösung auf die gewünschte Höhe der Viskosität vorgenommen werden, wobei das noch NCO-Gruppen aufweisende Polyurethan mit Molgewichten ⩾ 10 000 erhalten wird, das dann der Abstopperreaktion unterworfen wird.

Die so hergestellten, noch NCO-Gruppen aufweisenden Polyurethane oder Polyharnstoffe sollen ein mittleres Molekulargewicht oberhalb von 10 000 aufweisen. Das mittlere Molekulargewicht berechnet sich nach der Formel

$$\text{Mittleres Molakulargewicht} = \frac{f \cdot 42 \cdot \%\ \text{Feststoff}}{\%\ \text{NCO der Lösung}}$$

f bedeutet die Funktionalität des Polyurethans, die vorzugsweise um 2 liegt. Je nach Verwendung von Aufbaumaterialien, die anteilig mehr als zweifunktionell oder weniger als zweifunktionell sind, kann die Funktionalität etwa größer oder etwas kleiner als 2 sein.

Die Gesamtfunktionalität des Polyurethans kann dabei zwischen etwa 2,2 und 1,95, bevorzugt innerhalb engerer Grenzen, d.h. 2,05 bis 1,98 und besonders bevorzugt bei 2 liegen. Die Funktionalität der Polyurethanlösung berechnet sich aus den Komponenten mit Hilfe einer Formel, wie sie in der DE-A 32 27 679 als Vorbemerkung Im Beispielteil engegeben ist. Die Funktionalität des Polyurethans ist dadurch begrenzt, daß die NCO-Gruppenhaltige Polyurethanzwischenstufe in jedem Fall noch in den Lösungsmitteln für das Polyurethan in den gewünschten Konzentrationsbereichen löslich bleibt. Je nach Konzentration und eingestellter Viskosität der Lösungen kann die Funktionalität in den angegebenen Größenordnungen variiert werden. Bei der Herstellung der NCO-Endgruppenhaltigen Polyurethanzwischenstufen werden vorzugsweise Konzentration und Viskosität in die bereits später für die Anwendung erwünschte Größenordnung gebracht bzw. höherkonzentrierte Lösungen hergestellt, die dann auf Verarbeitungsviskosität bei der Verwendung verdünnt werden.

Der NCO-Gehalt in den NCO-haltigen Polyurethanzwischenstufen soll vor der erfindungsgemäßen Kettenabbruchsreaktion ⩽ 0,84 % NCO, bezogen auf PU-Feststoffgehalt, entsprechend ⩽ 0,2 Äquivalent NCO pro 1000 g Polyurethanfeststoff (bei der Funktionalität = 2,0 berechnet) betragen, liegt vorzugsweise bei ⩽ 0,42 % NCO entsprechend ⩽ 0,1 Äquivalent NCO pro 1000 g Polyurethan und besonders bevorzugt ⩽ 0,14 % NCO entsprechend ⩽ 0,033 Äquivalante NCO pro 1000 g Polyurethan. Die Untergrenze des NCO-Gehaltes der

Polyurethan-Zwischenstufe liegt bei etwa 0,0466 % NCO, entsprechend 0,001 Äquivalent NCO pro kg Polyurethan, ist aber bevorzugt höher, entsprechend ⩾ 0,014 % NCO entsprechend 0,033 Äquivalente pro 1000 g Polyurethan bevorzugt ⩾ 0,028 % NCO entsprechend 0,066 Äquivalenten pro 1000 g Polyurethan.

Als Lösungsmittel für die Polyurethane dienen dabei die üblichen, für die Polyurethanreaktionen bekannten inerten Lösungsmittel, wie zum Beispiel Tetrahydrofuran, Dioxan, Ethylacetat, Methylethylketon, Butylacetat, Toluol sowie auch die polararan Lösungsmittel wie Dimethylformamid oder Dimethylactamid. Die leicht flüchtigen Ether oder Ester beziehungsweise Kohlenwasserstoffe der genannten Art sind jedoch bevorzugt.

Zur Umsetzung der genannten noch geringen Mengen an NCO-Gruppen enthaltenden, bereits höhermolekularen Polyurethane mit den Kettenabbruchmitteln werden als Kettenabbruchmittel vorzugsweise Polyamine, in denen eine $NH_2$-Gruppe deutlich reaktiver ist als die anderen Aminogruppen, vorzugsweise Diamine aus der Gruppe der araliphatischen Diamine und/oder aromatischen Diamine oder aromatische Diamine mit unterschiedlich reaktiven $NH_2$-Gruppen verwendet. Die unterschiedliche Reaktivität der aromatischen Diamine wird dabei durch sterische Abschirmung der einen Aminogruppe beziehungsweise Desaktivierung durch Elektronen-abziehende Substituenten hervorgerufen.

Als Kettenabbruchsmittel werden beispielsweise araliphatische Polyamine, vorzugsweise Diamine vom Formeltyp I und/oder II verwendet:

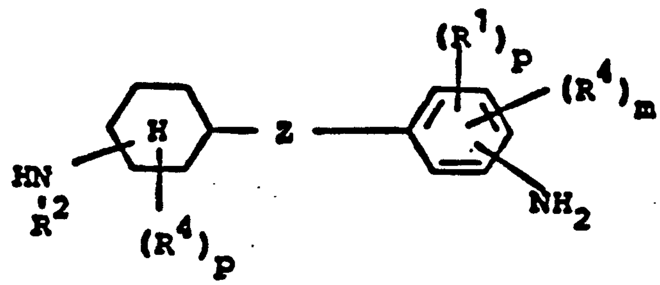

(I)

wobei

```
      R²              O            O
      |               ||           ||
Z = —C—,     —N(R²)C—,     —C—N(R²)—, (—S)m—SO2—, —O—, bevorzugt Z = CH2- und -C(CH3)2-
      |
      R³
```

$R^1$ = gegebenenfalls verzweigtes $C_1$-$C_{13}$-Alkyl, $-\overset{O}{\overset{\|}{C}}OR^4$, Halogen;

$R^2$ = H, gegebenenfalls verzweigtes $C_1$-$C_6$-Alkyl,
$R^3$ = H, Aryl, gegebenenfalls verzweigtes $C_1$-$C_6$-Alkyl,
$R^4$ = gegebenenfalls verzweigtes $C_1$-$C_6$-Alkyl,
m = 0, 1, 2 oder 3,
p = 0 oder 1
wobei für Formel (I) gilt: (m + p) = 0, 1, 2, 3 oder 4;

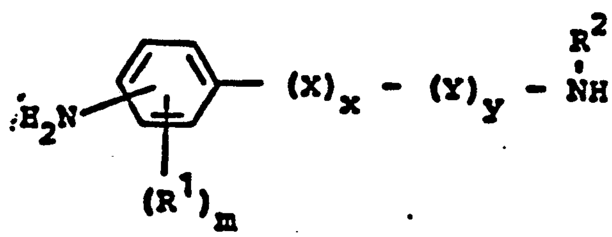

(II)

wobei
X = $-CH_2-CH_2-CH_2-$, -NH-, (dabei muß y ≠ Null sein)
$NR^4$-, (dabei muß y ≠ Null sein)

-O-, (dabei muß y ≠ Null sein)
-S-, (dabei muß y ≠ Null sein)
x = 0 oder 1
Y = $-(CH_2)_o-$ oder $-(CH_2.\underset{|\atop R^5}{CH}.O)_p-CH_2.\underset{|\atop R^5}{CH}-$,
wobei o = Null oder ganze Zahlen von 1 bis 6,
p = Null oder ganze Zahlen von 1 bis 6,
y = 0 oder 1 und
$R^5$ = H oder Methyl bedeutet.

Weiterhin sind aromatische Polyamine oder Formeln (III) oder (IV), vorzugsweise aromatiache Diamine mit unterschiedlicher Reaktivität der Aminogruppen (aus sterischen Gründen oder Substituenteneffekten) geeignet:

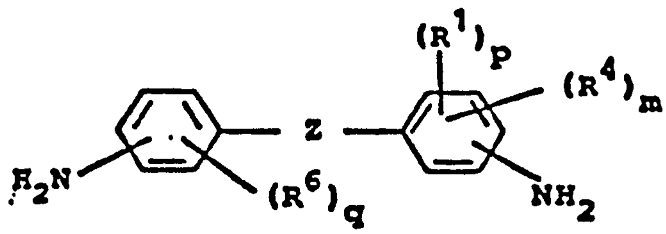

(III)

$R_6$ = $C_1$-$C_3$-Alkyl, jedoch nicht in Nachbarschaft zur $NH_2$-Gruppe,
m = 0, 1, 2 oder 3,
p = 0 oder 1, wobei (m + p) = 1, 2, 3 oder 4 sein muß,
q = 0 oder 1, wobei (m + p) -q ⩾ 1 sein muß;

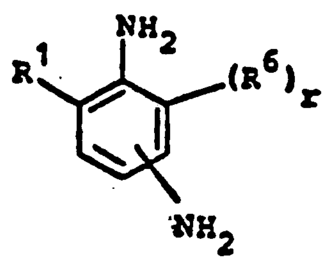

(IV)

$R^6$ = $C_2$-$C_4$-Alkyl, gegebenenfalls verzweigt,
r = 0 oder 1, wobei im Falle von $R^1$ = $COOR^4$, r = Null sein kann.

Durch die Wahl der Substituenten $R^1$ und $R^4$ und/oder durch die Summe von p und m kann die Aktivität der weniger reaktiven aromatischen (primären) Aminogruppe in weiten Grenzen variiert werden.

Bevorzugte araliphatische Diamine sind solche der Formel V:

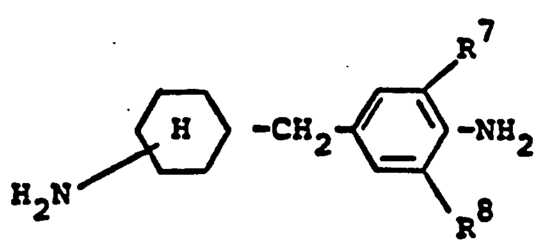

, (V)

wobei
$R^7$ und $R^8$ gleich oder verschieden sind und lineare oder gegebenenfalls Alkylgruppen mit 1 bis 4 C-Atomen sind.

Bevorzugte aromatische Diamine mit unterschiedlich reaktiven Aminogruppen sind solche der Formel VI:

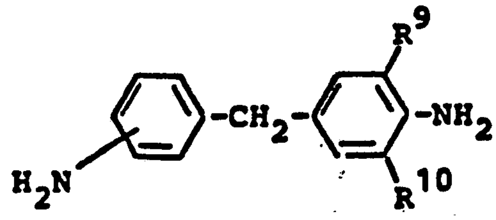

(VI)

wobei

$R^9$ lineare oder gegebenenfalls verzweigte Alkylgruppen mit 1 bis 4 C-Atomen $-CO_2R^4$ oder Halogen (F, Cl, Br oder J)

und

$R^{10}$ lineare oder gegebenenfalls verzweigte Alkylgruppen mit 1 bis 4 C-Atomen oder Halogen

sind.

In den Formeln (II) bis (VI) haben die nicht genannten Substituenten die gleiche Bedeutung wie in Formel (I); für den Fall, daß die Substituenten am aromatischen Kern entfallen, so steht an dieser Stelle ein Wasserstoff, was nicht besonders gekennzeichnet wird.

Neben den Verbindungen der Formeln (I) bis (VI) sind weitere, ausgewählte Verbindungen geeignet, wie sie in der folgenden Aufzählung enthalten sind:

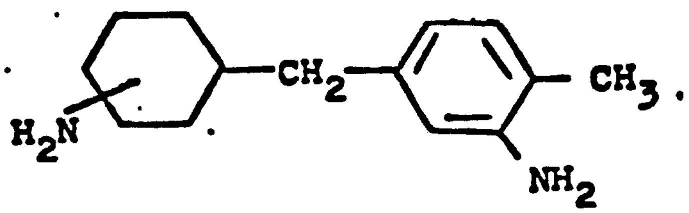 ;

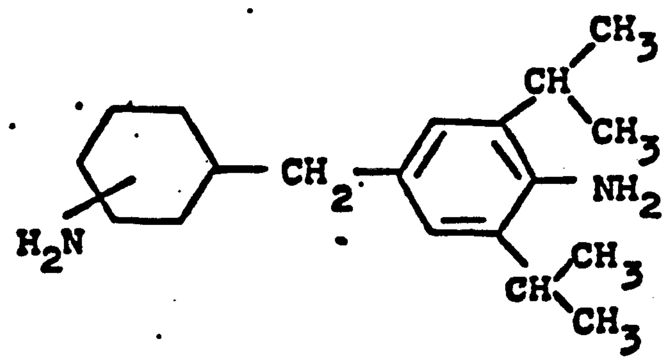 ;

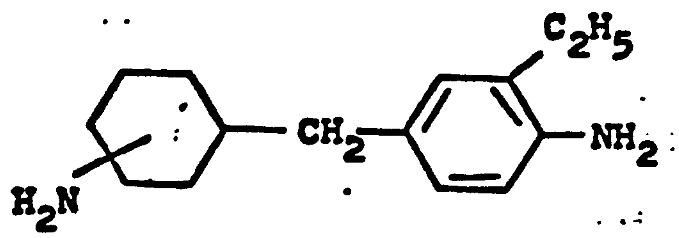 ;

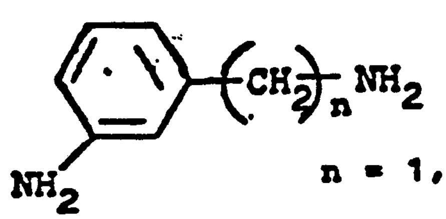

n = 1,2

; 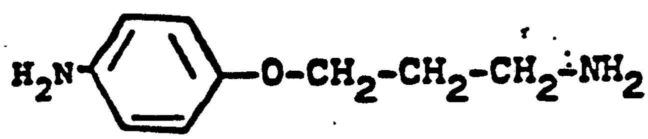

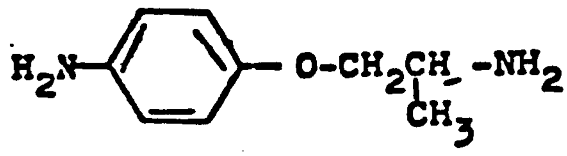 ; 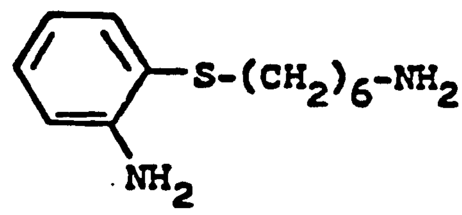

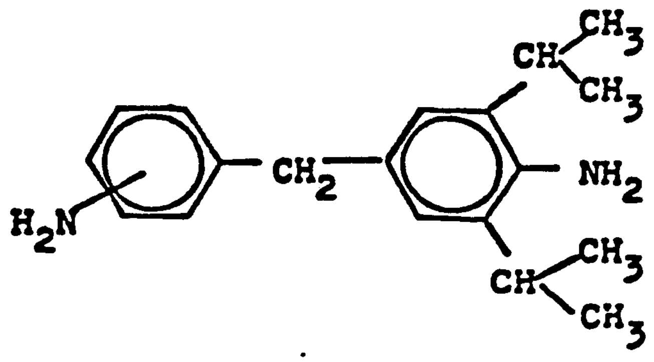

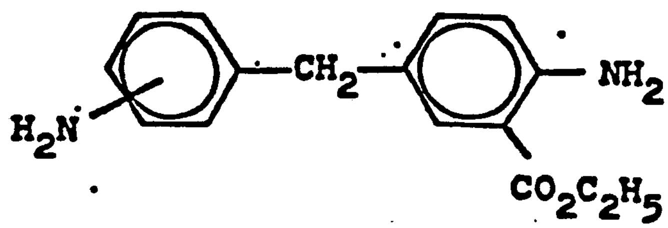

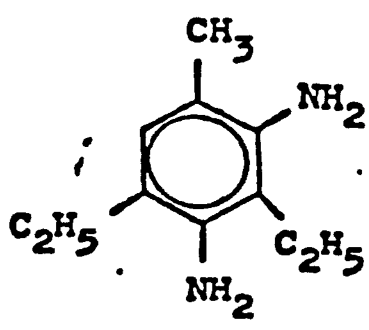 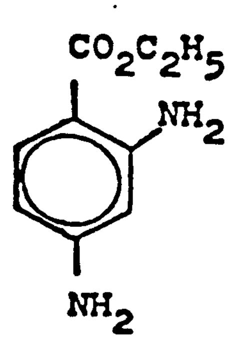

Die Umsetzung des noch NCO-Gruppen in den angegebenen Mengen tragenden, höhermolekularen Polyurethans in Form seiner Lösungen mit den Kettenabbruchsmittel erfolgt in einem Verhältnis von 1:5 bis 1:1,66 vorzugsweise 1:2,5 bis 1:1,95 und besonders bevorzugt mit den rechnerisch äquivalenten Mengen 1:2. Hierbei bilden sich Polyurethane mit endständigen aromatischen Aminogruppen, welche in der Menge etwa den endständigen NCO-Gruppen im bereits höhermolekularen Polyurethan des Mindestmolekulargewichts 10

000 entsprechen.

Bei Umsetzungen im Molverhältnis zwischen 1:1,66 und 1:2 kann eine teilweise Weiterreaktion der Kettenabbruchsmittel in bifunktioneller Form erfolgen, was bisweilen erwünscht ist, wenn man die Viskosität noch etwas nach oben korrigieren will. Beim Umsetzungsverhältnissen zwischen 1:2 und 1:5 bleiben zwangsläufig freie Diamine in der Lösung enthalten. Da insgesamt der Gehalt an Kettenabbruchsmittel-Diaminen außerordentlich gering ist, spielen diese kleinen Mengen an freien aromatischen Diaminen in der Lösung keine Rolle mehr. Sie setzen sich mit den bei der späteren Verwendung vorgesehenen Vermischung mit polyfunktionellen Polyisocyanaten ohne Störung um und werden dann in das vernetzte Polymere eingebaut. Es ist bei araliphatischen Diaminen als Kettenabbruchsmittel bevorzugt, Kettenabbruchsmittel in etwa äquivalentem Verhältnis (1:2) einzusetzen. Bei Kettenabbruchsmittel-Diaminen, bei welchen die Unterschiede der Reaktivität der Aminogruppen geringer sind, ist es vorteilhaft, Mengen oberhalb von 1:2 (und bis 1:5) einzusetzen, um einer gegebanenfalls unerwünschten Kettenverlängerungsreaktion, die sich mit der weniger reaktiven Aminogruppe ergeben kann, entgegenzuwirken.

Für die Herstellung dieses magnetischen Speichermediums ist es von Bedeutung, daß aufgrund der hohen Reaktivität der Aminoendgruppen des Polyurethans B die Verknüpfung mit der Isocyanatkomponente bevorzugt abläuft. Der Zusatz des Polyisocyanats zur magnetischen Dispersion erfolgt dabei kurz vor dem Auftrag der magnetischen Dispersion auf den unmagnetischen Schichtträger. Je nach Reaktivität des eingesetzten Stoppers gegenüber der Isocyanatverbindung läßt sich der Reaktionsablauf in entsprechender Weise steuern, ohne daß die gewünschte dreidimensionale Verknüpfung der Polyurethankomponente B durch nachteilige Nebenreaktionen beeinträchtigt wird. Aus diesem Grunde ist es erstmals möglich geworden, durch ein weich eingestelltes Polyurethan eine ungestörte Qualität der magnetischen Dispersion zu erhalten und gleichzeitig durch die anschließende gezielte Vernetzung herausragende mechanische Eigenschaften aufzubauen.

An Vorteilen werden dadurch erreicht:

- Verringerung des Bandabriebs
- Verbesserung der Lösemittelbeständigkeit
- Erhöhung der maximalen Pigmentvolumenkonzentration und damit eine Erhöhung der magnetischen Empfindlichkeit
- Absenkung des Rauschanteils und damit Erhöhung der Signal/Rauschabstände
- keine niedermolekularen Nebenprodukte aus Gleitmittel- oder Pigmentoberflächenbeschichtung, was zu weichmachenden Eigenschaften führt
- Steuerung dar Vernetzungsgeschwindigkeit durch die Reaktivität dar eingesetzten Aminoendgruppen

Als erfindungsgemässe Polyurethane 8-Komponente für die magnetisierbare Schicht gelöst in einem organischen Lösungsmittel werden beispielsweise genannt:

1. Umsetzungsprodukt von einem Polyester aus Adipinsäure und Butandiol 1 - 4, Butandiol-1 - 4 und Ethylenglycol, 4,4,-Diisocyanatdiphenylmethan, 1-Amino-3,3,5-Trimethyl-5-Aminomethylcyclohexan, abgestoppt mit (3-Amino-4-methylbenzyl)-cyclohexylamin.
2. Ebensolches Umsetzungsprodukt, abgestoppt mit 4,4'-Diaminodiphenylmethan
3. Ebensolches Umsetzungsprodukt, abgestoppt mit 4,4'-Diaminio-3-carbethoxy-diphenylmethan
4. Umsetzungsprodukt von Hexandiolcarbonat, Diisocyanatodiphenylmethan, Hexandiol-1,6 und Ethylglykol, Isophorondiamin, abgestoppt mit (3-Amino-4-methylbenzyl)-cyclohexylamin.
5. Umsetzungsprodukt von Hexandiolpolycarbonat, Gemisch von 2,4- und 2,6 - 7 Toluylendiisocyanat, Butandiol-1,4 und Ethylenglykol, Isophorondiamin, abgestoppt mit (3-Amino-4-methylbenzyl)-cyclohexylamin.

Als Polyisocyanate A der mittleren Funktionalität von 2,1 - 4 werden aliphatische oder cycloaliphatische, bevorzugt aromatische Polyisocyanate mit einer Funktionalität über 2,5, vorzugsweise von 3 z. B. Biurettriisocyanate oder Trimerisate des Hexamethylendiisocyanats oder Isophorondiisocyanats, trimeres Toluylen-2,4-diisocyanat, Mischtrimere aus Hexandiisocyanat und Toluylendiisocyanat, Umsetzungsprodukte von Toluylen-2,4-diisocyanat mit Triolen oder Polyolen, z. B. mit Trimethylolpropan, oder polyfunktionelle Mehrkernpolyisocyanate auf Basis von Polyaminen aus der Anilin-Formaldehyd-Kondensationsreaktion, eingesetzt. Sie werden in Mengen von 1 - 30 Gewichtsprozent bezogen auf Polyurethane B, C, D, verwandet.

Insbesondere wurde gefunden, daß durch den Zusatz eines oder mehrere Hydroxylgruppen enthaltender Polyester C der UH-Zahl 100 - 450 in einer Menge von 5 - 40 Gewichtsprozent in Bezug auf die Komponente B und/oder eines oder mehrerer aromatischen Polyamine D mit einem Molekulargewicht von 108 - 400 in einer Menge von 2 - 10 Gewichtsprozent, bezogen auf die Komponente B wie Vernetzung weiter verbessert werden kann.

Als Hydroxylgruppen enthaltende Polyester C dienen vorzugsweise solche, wie sie aus der Lacktechnologie wohlbekannt sind. Bei den aromatischen Polyaminen D handelt es sich unter anderam auch um Estergruppen enthaltende Diamine, wie sie in den DE-PS 18 03 635, 20 40 644, 20 40 650, 20 25 900, 21 60 589 und 21 60 590 oder alkylthiogruppensubstituierte aromatische Diamine gemäß DE-PS 28 38 760 oder halogenenthaltende Diamine wie beispielsweise 3,3'-Dichlor-, 4,4'-diaminodiphenylmethan. Bei einem Zusatz von mehr als 40 Gewichtsprozent an Polyester und mehr als 10 Gewichtsprozent an Polyaminen versprödet die magnetisierbare Schicht und die Haftung auf dem unmagnatischen Schichtträger ist somit nicht mehr ausreichend.

Die magnetisierbaren Schichten werden in bekannter Weise erzeugt, durch Dispergierung des magnetischen Pigments in Lösungen der beanspruchten Polyurethan-Bindemittel, gegebenenfalls mit Zusätzen und durch Aufbringen einer Schicht dieser magnatischen Dispersion auf einen unmagnetischen Schichtträger.

Als Lösemittel können alle zur Lösung von Polyurethanen gebräuchlichen Flüssigkeiten verwendet werden, sofern die Lösefähigkeit ausreicht. Beispiele sind Dimethylformamid, Dioxan, Tetrahydrofuran, Cyclohexan und andere, gegebenenfalls auch in Kombination miteinander oder mit anderen, wie zum Beispiel Methyl-Ethyl-Keton, Toluol, Methyl-Isobutylketon.

Als magnetisches Pigment kommen alle für Speicherzwecke geeigneten ferromagnetischen Stoffe in Betracht. Beispiele sind γ-Eisenoxide, Magnetite, Mischphasen aus Magnetit und γ-Eisenoxiden, Co-dotierte Eisenoxide, Ferrite, $CrO_2$, metallische Pigmente wie Reineisen oder ferromagnetische Metall-Legierungen.

In der Regel wird man zur Herstellung der magnetischen Dispersion Dispergierhilfsmittel einsetzen, die in jedem Fall auf das vorgelegte magnetische Pigment, das Lösemittel und die übrigen Rezepturbestandteile sowie die Eigenschaften der fertigen Schicht abgestimmt sein müssen. Die Auswahl erfolgt aus der Vielzahl bekannter oberflächenaktiver Verbindungen, wie zum Beispiel Lecithin, Cephalin, Fettsäureamine oder -diamine beziehungsweise deren Ammoniumsalze, ethoxylierte Fettsäurederivate, aliphatische oder aromatische gegebenenfalls ethoxylierte Phosphorsäureester, Sulfobernsteinsäureester, Sorbitan-Ester, aliphatische oder aromatische Sulfonsäuren oder Sulfonate, Fettalkoholsulfate und andere mehr.

Weitere Rezepturbestandteile können je nach den gewünschten Eigenschaften der magnetischen Dispersion oder der fertigen magnetisierbaren Schicht Verwendung finden. Infrage kommen vor allem Gleitmittel wie zum Beispiel Fettsäuren oder Fettsäurederivate, Silikonöle, Paraffine, Wachse, fluorierte Öle, Dispersionen von Polytetrafluorethylen. Mögliche andere Zusätze sind beispielsweise Weichmacher, Schleifmittel, viskositätsregulierende Stoffe u. a.

Die Herstellung der magnetischen Dispersion erfolgt in bekannter Weise durch Vermischen des magnetischen Pigments mit einem geeigneten Lösemittel durch Kneter, Rührer, Dissolver oder mittels anderer Mischaggregate. Das Lösemittel kann das gelöste Bindemittel ganz oder nur Teile davon enthalten, ebenso Dispergatoren oder andere Additive. Die vorgemischte Dispersion wird üblicherweise bis zur ausreichenden Verteilung des magnetischen Pigments einem Mahlprozeß unterworfen. Die Mahlung erfolgt zum Beispiel in Kugelmühlen, Perlmühlen, Sandmühlen o. ä.. Gegebenenfalls werden restliche Bindemittelanteile oder Additive nach Beendigung des Mahlvorganges zugemischt. Die anschließende Beschichtung des unmagnetischen Schichtträgers mit der magnetischen Dispersion erfolgt entsprechend dem Stand der Technik zum Beispiel mittels Reverse-Roll-Coater, Rasterdruck-, Extrudergießer. Als Schichtträger können Folien aus Polyester, wie Polyethylenterephthalat, Polyolefine, wia Polypropylen, Cellulosederivate wie -triacetat, Polycarbonate oder starre Schichtträger aus nichtmagnetischen Metallen wie Al, oder keramische Materialien eingesetzt werden. Die weitere Bearbeitung des beschichteten magnetischen Speichermediums, wie die Oberflächenglättung durch Kalandern, Schneiden und Konfektionieren, erfolgt in bekannter Weise.

Um Vorteile der erfindungsgemäßen Bindamittel zu belegen, werden folgende Eigenschaften eines auf 1,25 cm (1/2 Zoll) Breite getrennten magnetischen Speichermediums beschrieben.

1. Quelltemperatur (beschrieben in Farbe und Lack, Jahrgang 84, 1978, Heft 1, Seite 13 ff.): Die Probe wird in Cyclohexanon unterschiedlicher Temperatur getaucht. Das Auffalten der Magnetschicht je nach Höhe der Temperatur steht als Maß für dan Vernetzungsgrad.

2. Gewichtsabnahme: Die Probe wird während 24 Stunden am Soxhlett im THF extrahiert; je höher die Gewichtsabnahme, desto schwächer ist die Vernetzung.

3. Abriebsfestigkeit:

Eine 2-Stunden-Cassette wird auf einem VHS-Recorder (JVC 7200) fünfzigfach bei Raumtemperatur reversiert. Der Abrieb an der Kopftrommel, dem Lösch- und Synchronkopf und der Antriebswelle wird beurteilt (Note 1: kein Abrieb; Note 6: sehr viel Abrieb).

4. Stehbildzeit:

Es wird die Dauer der störungsfreien Wiedergabe eines Videosignals bestimmt.

5. Dispergierbarkeit:

Als Maß für die Dispergierbarkeit wird die magnetische Ausrichtung $M_RM_s$ herangezogen. Die Messung erfolgte bei einer Sättigungsmagnetisierung von 955 $^{KA}/_m$

Nachfolgend wird die Erfindung an Hand von Beispielen näher erläutert:

Herstellungsbeispiele für Polyurethan B für Produkt 1, 2 und 3

1000 g eines Polyesters aus Adipinsäure und Butandiol-1,4 (OH-Zahl 50,0, Säurezahl 0,8) werden für eine Stunde bei 100° C im Wasserstrahlvakuum entwässert. Nach Zugabe von 96 g Butandiol-1,4, 66,1 g Ethylengykol und 4260 g Tetrahydrofuran werden bei 40 bis 45° C 670 g 4,4-Diisocyanato-diphenylmethan zugegeben. Die Reaktion läßt die Temperatur auf 55° C ansteigen.

Nach Erreichen einer Viskosität von ca. 30 000 mPa.s bei 25° C wird der Rest-NCD-Wert ermittelt.

Die Lösungen werden für Produkt 1 abgestoppt mit
34,8 g (3-Amino-4-methylbenzyl)-cyclohexylamin,
für Produkt 2 abgestoppt mit
28,4 g 4,4'-Diaminodiphenylmethan
für Produkt 3 abgestoppt mit
53,0 g 4,4'-Diamino-3-carbethoxydiphenylmethan
Anschließend wird auf 20 % Feststoff mit Tetrahydrofuran verdünnt.

Herstellungsbeispiel für Polyurethan B - Produkt 4

292 g eines Hexandiol-polycarbonats der OH-Zahl 105,8 in 980 g Tetrahydrofuran (THF) werden bei 50°C mit 115,7 g 4,4'-Diisocyanatodiphenylmethan gemischt. Nach 30 Minuten werden 8,12 g Hexandiol-1,6 und 4,27 g Ethylenglycol als Mischung eingetropft. Nach 6 Stunden bei 50 - 55°C erhält man einen konstanten NCO-Wert von 0,17 %.

1100 g des Prepolymeren werden zu 10 % d.Th. mit Isophorondiamin verlängert, wobei die Viskosität von 6 800 mPas bei 24°C auf 16 000 mPas bei 44°C ansteigt. Durch Zugabe von 8,75 g 4-(3-Amino-4-methylbenzyl)-cyclohexylamin wird abgestoppt. Nach Verdünnen mit THF auf einen Feststoffgehalt von 20 % besitzt die Lösung eine Viskosität von 2 800 mPas.

Herstellungsbeispiel für Polyurethan B - Produkt 5

116,8 g Hexandiolpolycarbonats der OH-Zahl 56 in 980 g Tehydrofuran werden bei 50° mit 216,7 g eines Gemisches aus 65 % 2,4- und 35 % 2,6-Toluylendiisocyanat vermischt. Nach Zugabe von 12,5 ppm (bezogen auf Polyether) Dibutylzinndilaurat werden 30 Minuten nachgerührt. Anschließend werden eine Mischung von 51,23 g Butandiol-1,4 und 35,3 g Ethylenglykol eingetropft. Nach 30 Stunden bei 55-60°C erhält man einen konstanten NCO-Wert von 0,17 %. 1100 g des Prepolymeren werden zu 75 % d. Th. mit Isophorondiamin verlängert wobei die Viskosität von 1000 mPas bei 24°C auf 16 000 mPas bei 31°C ansteigt. Durch Angabe von 2,21 g 4-(3-Amino-4-methylbenzyl)-cyclo-hexylamin wird abgestoppt. Nach Verdünnen mit THF hat die Lösung eine Viskosität von 2 760 mPas.

Einer speziellen Ausführungsform des erfindungsgemäßen magnetischen Aufzeichnungsmaterials liegt folgende Formulierung zugrunde:

| | |
|---|---|
| Magnetisches Pigment (Fe/Ni-Legierung einer Koerzivkraft von 107,5 $^{KA}/_{m}$) | 100 Gewichtsteile |
| Lecithin | 4 Gewichtsteile |
| Erfindungsgemäßes Polyurethan | 20 Gewichtsteile |
| Umsetzungsprodukt aus 1 mol 1,1,1-Trimethylpropan und 3 Mol Toluylendiisocyanat (2,4) (Desmodur L) 75 %ig | 5 Gewichtsteile |
| Schmiermittel | 2 Gewichtsteile |
| Tetrahydrofuran | 150 Gewichtsteile |
| Cyclohexanon | 100 Gewichtsteile |

Das Metallpigment wird mit Cyclohexanon dem Lösemittel, dem Schmiermittel und dem erfindungsgemäßen reaktiven Polyurethan innig vermischt und in einer Sandmühle gemahlen. Die erhaltene magnetische Dispersion wird mit dem Desmodur L vermengt und in bekannter Weise auf eine Polyesterfolie aufgebracht, magnetisch ausgerichtet, getrocknet, kalandriert und anschließend auf 1,25 cm Breite getrennt.

**Ausführungsbeispiele 1 - 5**

Für die einzelnen magnetischen Dispersionen wurden jeweils die Polyurethane B und zwar die Produkte 1 bis 5 eingesetzt.

**Ausführungsbeispiel 6**

Von den 20 Gewichtsteilen des erfindlichen reaktiven Polyurethans a) werden 2 Gewichtsteile durch ein Polyesterpolyol (Desmophen® 650, Bayer AG) ersetzt.

**Ausführungsbeispiel 7**

Von den 20 Gewichtsteilen des erfindungsgemäßen reaktiven Polyurethans 1 werden 7 Gewichtsteile durch ein Polyesterpolyol (Desmophen® 650, Bayer AG) ersetzt.

**Ausführungsbeispiel 8**

Von den 20 Gewichtsteilen des erfindungsgemäßen reaktiven Polyurethane 1 werden 6 Gewichtsteile durch ein aromatisches Diamin (4,4'-Diamino-3,5-diisopropyl-diphenylmethan) ersetzt.

**Vergleichsbeispiel**

Die 20 Gewichtsteile des erfindungsgemäßen reaktiven Polyurethans werden durch 10 Gewichtsteile eines aromatischen Polyester-Polyurethans (Estane® 5701, B. F. Goodrich Company) und 10 Gewichtsteile eines teilhydrolysierten Polyvinylchloridpolyvinylacetatcopolymeren (Vinylite® VAGH, Union Carbide) ersetzt.
Die Ergebnisse sind in Tabelle 1 dargestellt.

**Tabelle 1**

| Beispiel<br>Nr. | $M_RM_S$ | Quell-<br>temperatur<br>°C | Gewichts-<br>abnahme<br>bezogen<br>auf Pigment<br>% | Abrieb-<br>festig-<br>keit<br>Note | Steh-<br>bild-<br>zeit<br>min |
|---|---|---|---|---|---|
| 1 | 140 | 2,7 | 1 | 60 | 0,85 |
| 2 | 140 | 3,5 | 2 | 60 | 0,85 |
| 3 | 140 | 2,5 | 1 | 60 | 0,85 |
| 4 | 140 | (3,0) | 2 | 60 | 0,90 |
| 5 | 140 | (2,0) | 2 | 60 | 0,90 |
| 6 | 70 | 4,0 | 2 | 50 | 0,86 |
| 7 | 100 | 5,3 | 2 | 55 | 0,86 |
| 8 | 120 | 4,2 | 2 | 60 | 0,86 |
| Vergleichs-<br>beispiel | 30 | 22 | 4 | 30 | 0,85 |

Ähnliche Ergebnisse werden auch erzielt, wenn man anstelle eines Metallpulver als magnetisches Pigment Eisenoxide einsetzt.

**Patentansprüche**

1. Magnetisches Speichermedium bestehend aus einem unmagnetischen Schichtträger, und mindestens einer darauf befindlichen, magnetisierbaren Schicht, die feinteilige, magnetische Pigmente und als Bindemittel Polyurethane enthält, dadurch gekennzeichnet, daß die Polyurethanbindemittel Umsetzungsprodukte sind von

A. Polyisocyanaten der mittleren Funktionalität 2,1 bis 4 mit

B. aromatische Aminoendgruppen tragenden Polyurethanen mit einer Funktionalität zwischen 1,95 und 2,2 und mit einem mittlaren Molekulargewicht von mindastens 10 000 und gegebenanfalls

C. 5 - 40 Gewichtsprozent der Komponente B einas oder mehrerer hydroxylgruppenhaltiger Polyester der OH-Zahl 100 - 450 und/oder

D. 2 - 10 Gewichtsprozent der Komponente B bifunktioneller aromatischer Polyamine mit einem Molekulargewicht von 108 - 400,

wobei das Verhältnis der in A vorhandenen Isocyanatgruppen zu den in B, C und D vorhandenen, gegenüber Isocyanat reaktiven Gruppen zwischen 0,3 : 1 und 20 : 1 liegt.

2. Magnatisches Speichermedium nach Anspruch 1, dadurch gekennzeichnet, daß die aromatische Aminoendgruppen tragenden Polyurethane B in Lösung hergestellt sind, durch Umsetzung eines Isocyanatgruppen enthaltenden Reaktionsgemisches aus

a) einem weitgehend bifunktionellen gegenüber Isocyanatgruppen reaktiven Gemisch aus der Gruppe der Hydroxylgruppen enthaltenden Polyester und/oder Polyether des Molekulargewichts 300 - 6000 und/oder niedermolekularen Diole, Diamine oder Aminoalkohole des Molekulargewichts 32 - 400 mit einem mittleren OH-Zahl-Äquivalent von 40 - 1200 mit

b) mindestens einem Polyisocyanat, welches im wesentlichen difunktionell ist und bis 5 Mol.% höherfunktionelle Anteile haben kann, wobei das Verhältnis der Isocyanatgruppen in b) zu den gegenüber Isocyanatgruppen reaktiven Gruppen in a) zwischen 1,45 : 1 und 1,02 : 1 liegt und aus der Umsetzung von a) und b) ein Isocyanatgruppen enthaltendes Prepolymer entsteht, das mit Polyaminen ausgewählt aus der Gruppe der aliphatischen und/oder aromatischen bifunktionellen Polyamine weiter umgesetzt worden ist, wobei das Verhältnis von Isocyanatgruppen im Prepolymeren zu Aminogruppen der Polyamine zwischen 1 : 5 und 1 : 1,5 liegt.

3. Magnetisches Speichermedium nach Anspruch 2, dadurch gekennzeichnet, daß das Prepolymer mit araliphatischen Diaminen weiter umgesetzt worden ist, wobei das Verhältnis von Isocyanatgruppen im Prepolymeren zu Aminogruppen zwischen 1 : 2,5 und 1 : 1,8 liegt.

4. Magnetisches Speichermedium nach Anspruch 2, dadurch gekennzeichnet, daß das Prepolymer mit aromatischen Diaminen weiter umgesetzt worden ist, wobei das Verhältnis von Isocyanatgruppen im Prepolymeren zu Aminogruppen zwischen 1 : 5 und 1 : 2 liegt.

5. Magnetisches Speichermedium nach Anspruch 2 und 4, dadurch gekennzeichnet, daß aromatische Diamine mit aus sterischen und/oder mesomeren Gründen unterschiedlich gegenüber Isocyanatgruppen reagierenden Aminogruppen eingesetzt sind.

6. Magnetisches Speichermedium nach Anspruch 1 bis 5, dadurch gekennzeichnet, daß das Verhältnis der im Polyisocyanat A enthaltenen Isocyanatgruppen zu den gegenüber Isocyanat reaktiven Gruppen der aromatische Aminogruppen tragenden Polyurethane B vorzugsweise zwischen 0,8 : 1 und 20 : 1 liegt.

7. Magnetisches Speichermedium nach den Ansprüchen 1 bis 6, dadurch gekennzeichnet, daß die Polyurethanbindemittel Umsetzungsprodukte sind von (A) Polyisocyanaten der mittleren Funktionalität 2,1 - 4 mit (B) aromatische Aminoendgruppen tragenden Polyurethanen mit einer Funktionalität zwischen 1,95 und 2,2 und mit einem mittleren Molekulargewicht von mindestens 10 000 und (C) 5 - 40 Gewichtsprozent der Komponente B eines oder mehrerer hydroxylgruppenhaltiger Polyester der OH-Zahl 100 - 450.

8. Magnetisches Speichermedium nach den Ansprüchen 1 bis 6, dadurch gekennzeichnet, daß die Polyurethanbindemittel Umsetzungsprodukte sind von (A) Polyisocyanaten der mittleren Funktionalität 2,1 - 4 mit (B) aromatische Aminoendgruppen tragenden Polyurethanen mit einer Funktionalität zwischen 1,95 und 2,2 und mit einem mittleren Molekulargewicht von mindestens 10 000 und (D) 2 - 10 Gewichtsprozent der Komponente B bifunktioneller aromatischer Polyamine mit einem Molekulargewicht von 108 - 400.

## Revendications

1. Support magnétique d'enregistrement, constitué d'un support de couche non magnétique et d'au moins une couche magnétisable se trouvant sur le support, qui contient des pigments magnétiques finement divisés et, comme liants, des polyuréthannes, caractérisé en ce que les polyuréthannes utilisés comme liants sont des produits de réaction

A. de polyisocyanates de fonctionnalité moyenne allant de 2,1 à 4 avec

B. des polyuréthannes porteurs de groupes amino aromatiques terminaux ayant une fonctionnalité comprise entre 1,95 et 2,2 et un poids moléculaire moyen d'au moins 10 000, et le cas échéant

C. 5 à 40 % en poids du composant B d'un ou plusieurs polyesters porteurs de groupes hydroxyle, d'indice d'hydroxyle égal à 100 - 450 et/ou

D. de 2 à 10 % en poids du composant B de polyamines aromatiques bifonctionnelles ayant un poids moléculaire de 108 à 400,

le rapport des groupes isocyanato présents dans A aux groupes réactifs vis-à-vis de groupes isocyanato présents dans B, C et D se situant entre 0,3 : 1 et 20 : 1.

2. Support magnétique d'enregistrement suivant la revendication 1, caractérisé en ce que les polyuréthannes B porteurs de groupes terminaux amino-aromatiques sont produits en solution par réaction d'un mélange réactionnel contenant des groupes isocyanato constitué

a) d'un mélange réactif vis-à-vis de groupes isocyanato, largement bifonctionnel, de la classe des polyesters et/ou polyéthers porteurs de groupes hydroxyle d'un poids moléculaire de 300 à 6000 et/ou de diols, diamines ou aminoalcools de bas poids moléculaire, dont le poids moléculaire va de 32 à 400, avec un équivalent moyen d'indice d'hydroxyle de 40 à 1200, avec

b) au moins un polyisocyanate qui est principalement difonctionnel et qui peut contenir jusqu'à 5 moles % de portions de plus grande fonctionnalité, le rapport des groupes isocyanato dans b) aux groupes réactifs vis-à-vis de groupes isocyanato dans a) étant compris entre 1,45 : 1 et 1,02 : 1 et il se forme dans la réaction de a) et b) un prépolymère porteur de groupes isocyanato dont la réaction a été poursuivie avec des polyamines choisies dans le groupe des polyamines bifonctionnelles aliphatiques et/ou aromatiques, le rapport des groupes isocyanato dans le prépolymère aux groupes amino des polyamines ayant une valeur de 1 : 5 à 1 : 1,5.

3. Support magnétique d'enregistrement suivant la revendication 2, caractérisé en ce que le prépolymère a été amené à réagir ensuite avec des diamines araliphatiques, le rapport des groupes isocyanato dans le prépolymère aux groupes amino étant compris entre 1 : 2,5 et 1 : 1,8.

4. Support magnétique d'enregistrement suivant la revendication 2, caractérisé en ce que le prépolymère a ensuite été amené à réagir avec des diamines aromatiques, le rapport des groupes isocyanato dans le prépolymère aux groupes amino étant compris entre 1 : 5 et 1 : 2.

5. Support magnétique d'enregistrement suivant les revendications 2 et 4, caractérisé en ce qu'on utilise des diamines aromatiques portant des groupes amino réagissant différemment vis-à-vis de groupes isocyanato pour des raisons stériques et/ou mésomériques.

6. Support magnétique d'enregistrement suivant les revendications 1 à 5, caractérisé en ce que le rapport des groupes isocyanato contenus dans le polyisocyanate A aux groupes aptes à réagir vis-à-vis d'un isocyanate des polyuréthannes B porteurs de groupes amino aromatiques se situe de préférence entre 0,8 : 1 et 20 : 1.

7. Support magnétique d'enregistrement suivant les revendications 1 à 6, caractérisé en ce que les polyuréthannes servant de liant sont des produits de réaction (A) de polyisocyanates de fonctionnalité moyenne égale à 2,1 - 4 avec (B) des polyuréthannes porteurs de groupes terminaux amino aromatiques ayant une fonctionnalité comprise entre 1,95 et 2,2 et un poids moléculaire moyen d'au moins 10 000 et (C) 5 à 40 % en poids du composant B d'un ou plusieurs polyesters porteurs de groupes hydroxyle, d'indice d'hydroxyle égal à 100 - 450.

8. Support magnétique d'enregistrement suivant les revendications 1 à 6, caractérisé en ce que les polyuréthannes utilisés comme liant sont des produits de réaction (A) de polyisocyanates de fonctionnalité moyenne égale à 2,1 - 4 avec (B) des polyuréthannes porteurs de groupes terminaux amino aromatiques de fonctionnalité comprise entre 1,95 et 2,2 et de poids moléculaire moyen au moins égal à 10 000 et (D) de 2 à 10 % en poids du composant B de polyamines aromatiques bifonctionnelles ayant un poids moléculaire de 108 à 400.

## Claims

1. Magnetic storage medium consisting of a non-magnetic layer support and, situated on this support, at least one magnetisable layer containing finely divided, magnetic pigments and polyurethanes as binders, characterised in that the polyurethane binders are reaction products of

A. polyisocyanates having an average functionality of 2.1 to 4 and

B. polyurethanes carrying aromatic amino end groups and having a functionality between 1.95 and 2.2 and an average molecular weight of at least 10,000 and, optionally,

C. 5 - 40 per cent by weight of component B of one or more hydroxyl-group-containing polyesters having an OH number of 100 - 450 and/or

D. 2 - 10 per cent by weight of component B of bifunctional aromatic polyamines having a molecular weight of 108 - 400,

the ratio of the isocyanate groups present in a to the isocyanate-reactive groups present in B, C and D being between 0.3 : 1 and 20 : 1.

2. Magnetic storage medium according to Claim 1, characterised in that the polyurethanes B carrying aromatic amino end groups are prepared in solution by reacting a reaction mixture, containing isocyanate groups, of

a) a largely bifonctional mixture, which is reactive towards isocyanate groups, from the group comprising hydroxyl-group-containing polyesters and/or polyethers of a molecular weight of 300 - 6000 and/or low molecular weight diols, diamines or aminoalconols of a molecular weight of 32 - 400 with an average OH number equivalent of 40 - 1200 and

b) at least one polyisocyanate which is essentially difunctional and can have up to 5 mol % of higherfunctional components, the ratio of the isocyanate groups in b) to the groups in a) which are reactive towards isocyanate groups being between 1.45 : 1 and 1.02 : 1 and the reaction of a) and b) resulting in a prepolymer which contains isocyanate groups and has been reacted further with polyamines selected from the group comprising aliphatic and/or aromatic bifunctional polyamines, the ratio of isocyanate groups in the prepolymer to amino groups of the polyamines being between 1 : 5 and 1 : 1.5.

3. Magnetic storage medium according to Claim 2, characterised in that the prepolymer has been reacted further with araliphatic diamines, the ratio of isocyanate groups in the prepolymer to amino groups being between 1 : 2.5 and 1 : 1.8.

4. Magnetic storage medium according to Claim 2, characterised in that the prepolymer has been reacted further with aromatic diamines, the ratio of isocyanate groups in the prepolymer to amino groups being between 1 : 5 and 1 : 2.

5. Magnetic storage medium according to Claim 2 and 4, characterised in that aromatic diamines containing amino groups which react differently towards isocyanate groups for steric and/or mesomeric reasons, are used.

6. Magnetic storage medium according to Claim 1 to 5, characterised in that the ratio of the isocyanate groups contained in the polyisocyanate a to the isocyanate-reactive groups of the polyurethanes B carrying aromatic amino groups is preferably between 0.8 : 1 and 20 : 1.

7. Magnetic storage medium according to Claims 1 to 6, characterised in that the polyurethane binders are reaction products of (a) polyisocyanates having an average functionality of 2.1 - 4 and (B) polyurethanes carrying aromatic amino end groups and having a functionality of between 1.95 and 2.2 and an average molecular weight of at least 10,000 and (C) 5 - 40 per cent by weight of component B of one or more hydroxyl-group-containing polyesters with an OH number of 100 - 450.

8. Magnetic storage medium according to Claims 1 to 6, characterised in that the polyurethane binders are reaction products of (a) polyisocyanates having an average functionality of 2.1 - 4 and (B) polyurethanes carrying aromatic amino end groups and having a functionality between 1.95 and 2.2 and an average molecular weight of at least 10,000 and (D) 2 - 10 per cent by weight of component B of bifunctional aromatic polyamines with a molecular weight of 108 - 400.